**Europäisches Patentamt**

**European Patent Office**

**Office européen des brevets**

(11) Veröffentlichungsnummer : **0 108 203**
**B1**

(12) # EUROPÄISCHE PATENTSCHRIFT

(45) Veröffentlichungstag der Patentschrift :
**10.02.88**

(21) Anmeldenummer : **83108060.1**

(22) Anmeldetag : **16.08.83**

(51) Int. Cl.⁴ : **A 47 J 27/08**

(54) **Dampfdruckkochtopf.**

(30) Priorität : **04.09.82 DE 3232907**

(43) Veröffentlichungstag der Anmeldung :
**16.05.84 Patentblatt 84/20**

(45) Bekanntmachung des Hinweises auf die Patenterteilung : **10.02.88 Patentblatt 88/06**

(84) Benannte Vertragsstaaten :
**AT BE CH DE FR GB IT LI LU NL SE**

(56) Entgegenhaltungen :
**DE-A- 2 534 709**
**DE-A- 2 801 173**
**DE-C-   33 658**
**DE-C-   896 409**
**DE-U- 7 715 930**

(73) Patentinhaber : **Boehm, Hans-Georg, Dr. rer. nat.**
**Kellergrundweg 13**
**D-6242 Kronberg/Ts (DE)**

(72) Erfinder : **Boehm, Hans-Georg, Dr. rer. nat.**
**Kellergrundweg 13**
**D-6242 Kronberg/Ts (DE)**

(74) Vertreter : **Eisenführ & Speiser**
**Martinistrasse 24**
**D-2800 Bremen 1 (DE)**

## Beschreibung

Die Erfindung betrifft einen Dampfdruckkochtopf aus einem oben offenen Kochgutbehälter mit einem die Öffnung umgebenden, gleichförmig umlaufenden Rand, einem auf den Behälterrand mit seinem Rand aufsetzbaren, ein Sicherheitsventil aufweisenden Deckel, sowie einer Schließmechanik, deren die Ränder von Behälter und Deckel im Schließzustand gegeneinander pressenden Verschlußglieder gemeinsam von einer zentrisch angeordneten, relativ zum Deckel beweglichen Betätigungseinrichtung zwischen einer Öffnungsstellung und einer Schließstellung verstellbar sind.

Aus der DE-C 33 658 ist ein derartiger « Papin'scher Topf » bekannt, dessen kreisrunder Deckel auf seiner Oberseite eine das Ventil konzentrisch umgebende Scheibe lagert, an welcher sich im wesentlichen radial auswärts erstreckende, stangenförmige Verschlußglieder angelenkt sind, die durch Drehen der Scheibe mit Hilfe eines sich ebenfalls radial auswärts erstreckenden Handgriffs in am Behälter befestigte Ösen geschoben oder aus diesen heraus bewegt werden können. An ihren freien Enden, mit denen sie in die Ösen eindringen, sind die Verschlußglieder keilförmig zugespitzt, so daß beim Verschließen des Topfes die gewünschte und erforderliche Pressung zwischen Deckel und Behälter eintritt. Eine gesonderte Dichtung zwischen dem Behälter und dem Deckel ist nicht vorgesehen.

In den sich hieran anschließenden Jahrzehnten sind viele Verbesserungen an Dampfdruckkochtöpfen vorgeschlagen worden, welche vornehmlich das Ziel höherer Sicherheit und einfacherer Bedienung hatten. Darüber hinaus sollte dem Wunsch Rechnung getragen werden, den Kochgutbehälter, also den eigentlichen Topf oder « Untertopf », bei abgenommenem Deckel gar nicht als Teil eines Dampfdruckkochtopfes erscheinen zu lassen. Es hat sich jedoch gezeigt, daß diesen verschiedenartigen Forderungen und Wünschen nicht gleichzeitig und schon gar nicht in gleichem Maße Rechnung getragen werden konnte.

So ist zwar aus dem DE-U 77 15 930 ein Dampfdruckkochtopf bekannt, dessen Kochgutbehälter zur Verankerung der Schließmechanik nur einen nach außen abgekröpften, aber umlaufend oberseitig glatten Rand benötigt, der ihn nicht als Teil eines Dampfdruckkochtopfes erkennbar macht ; auch sind mit demselben Deckel verschiedene Kochgutbehälter — insbesondere unterschiedlicher Größe — kombinierbar. Nachteilig ist jedoch, daß die Schließmechanik aus einem vom Deckel unabhängigen Spannverschluß in Form eines geteilten Ringes besteht. Dessen Handhabung ist überdies umständlich und nicht ungefährlich, weil nicht sichergestellt ist, daß beim Öffnen des Spannverschlusses der ursprüngliche Überdruck im Topfinnern bereits vollständig abgebaut ist.

Der ebenfalls ringförmige Spannverschluß gemäß der DE-B 25 34 709 ist zwar besser handhabbar und verwendet auch kein vom Deckel getrenntes, verlierbares Bauteil, er hat jedoch den Nachteil, daß er eine besondere Formgebung des Kochgutbehälterrandes erfordert, welche hinderlich und auch in der Herstellung aufwendig ist. Darüber hinaus widerspricht das notwendigerweise seitliche Aufsetzen und Abnehmen des Deckels (bei geöffnetem Halbringverschluß) der Forderung einfacher und logischer Bedienbarkeit. Auch sind wiederum Gefährdungen beim Abnehmen des Deckels durch seitlich entweichenden Dampf nicht ausgeschlossen.

Diesem und ähnlichem Stand der Technik gegenüber liegt der Erfindung die Aufgabe zugrunde, einen Dampfdruckkochtopf der eingangs geschilderten Art dahingehend zu verbessern, daß seine Bedienung einfach und ungefährlich ist.

Diese Aufgabe wird erfindungsgemäß dadurch gelöst, daß der Deckel aus einer zentrischen, die Verschlußglieder betätigenden Haube und einem diese konzentrisch umgebenden, gegenüber dem Behälter mit Hilfe eines an sich bekannten Dichtungsprofils abgedichteten Rahmen besteht, wobei die Haube den Rahmen überlappend untergreift und an einer an der Unterseite des Rahmens gehaltenen Dichtung derart anliegt, daß die relative Position von Haube und Dichtung unter dem Druck im Topfinnern infolge Abdichtung und Reibungswiderstand die Öffnungsbetätigung der Verschlußglieder durch die Haube verhindert und nur bei geringem Restdruck infolge Abhebens der Haube von der Dichtung erlaubt. Die beiden konzentrischen Deckelteile bilden also mit der Dichtung ein Ventil, welches durch Druck auf die Haube (entgegen einem Druck im Topfinnern) geöffnet werden kann. Der relativ große Umfang dieses Ventils läßt einen Innendruck rasch zusammenbrechen. Andererseits hält wegen der großen Haubenfläche schon ein relativ kleiner Innendruck dieses Ventil sicher geschlossen.

Dem erfindungsgemäß geteilten Deckel werden auf diese Weise zusätzliche Funktionen zugewiesen, indem zum einen die den größten Teil des Deckels bildende Haube zugleich die Verschlußglieder betätigt und sie zum andern mit dem Rahmen und der Dichtung ein Dampfablaßventil bildet. Ferner ist, solange ein Druck im Innenraum herrscht, die Betätigungseinrichtung für die Verschlußglieder praktisch blockiert, weil wegen der großen, dem Druck zugewandten Haubenfläche eine entsprechend große Reibungskraft zwischen Haube und Dichtprofil-Lippe ein Drehen der Haube unter Druck so gut wie unmöglich macht. Ein Öffnen des Topfes unter Druck, das fatale Folgen hätte, wird so verhindert.

Vorzugsweise ist die Dichtung zwischen Haube und Rahmen eine Lippe des Dichtungsprofils.

Dichtungsprofile zwischen Deckel und Kochgutbehälter sind an sich vielfach bekannt ; vgl. beispielsweise die schon erwähnte DE-B 25 34 709 oder die DE-A 28 01 173. Neu ist jedoch nicht nur ihre Verwendung bei einem Dampfdruckkochtopf der eingangs angegebenen Gattung, sondern auch die erfindungsgemäße lösbare Einspannung eines Profilabschnitts.

Häufig werden Kochgutbehälter und/oder Deckel kreisrund sein ; erforderlich ist dies jedoch nicht, vielmehr sind auch ovale, rechteckige oder quadratische Topfgrundrisse möglich. Ebensowenig ist erforderlich, daß die Relativbewegung zwischen Haube und Rahmen zwecks Betätigung der Verschlußglieder — wie gemäß der DE-C 33 658 — eine drehende (um die Mittelachse) ist. Auch seitliche Longitudinalbewegungen oder insbesondere eine senkrechte Verschiebebewegung (gewissermaßen in Verbindung mit dem Öffnen des Druckausgleichventils) kann zur Betätigung der Verschlußglieder vorgesehen sein.

Im Falle eines kreisförmigen Topfquerschnitts allerdings wird man die Haube kreisförmig und den Rahmen kreisringförmig ausbilden, wobei dann die Haube und der Rahmen gegeneinander um die Mittelachse verdrehbar sind.

Um sicherzustellen, daß auch bei drucklosem Innenraum der den Rahmen überlappende Randabschnitt der Haube dichtend an der Lippe des Dichtungsprofils anliegt, sind vorteilhaft Vorspannmittel vorgesehen, welche die Haube in Anlage an die Lippe des Dichtungsprofils drücken.

Gemäß einer Weiterbildung der Erfindung ist die Anordnung so getroffen, daß mindestens ein Sperrglied zwischen der Haube und dem Rahmen vorgesehen ist, welches nur in der Schließstellung der Verschlußglieder die Anlage der Haube an die Lippe gestattet und in jeder anderen Stellung der Verschlußglieder die Haube auf Abstand von der Lippe des Dichtungsprofils hält. Dadurch wird gewährleistet, daß das zwischen Haube und Rahmen ausgebildete Druckausgleich geöffnet bleibt, bis der Deckel am Kochgutbehälter vollständig verriegelt ist. Ferner wird durch diese Maßnahme die Gefahr, daß die Deckelverriegelung geöffnet wird, ehe ein Innendruck im Topf sich vollständig abgebaut hat, weiter verringert.

Eine andere vorteilhafte Weiterbildung besteht darin, daß die Betätigungseinrichtung (für die Verschlußglieder) einen unverdrehbar, aber senkrecht verschieblich an der Haube gehaltenen, zentrischen Griff aufweist und ein Fortsatz am Griff mit der Haube ein in die Schließstellung vorgespanntes, durch Verschieben des Griffs zu öffnendes Dampfablaßventil bildet. Mit diesem Griff läßt sich eine Haube auf einfache Weise sowohl abwärts bewegen als auch gegenüber dem Rahmen verdrehen. Das zwischen Griff und Haube ausgebildete Dampfablaßventil ist dem oben erwähnten, zwischen Haube und Rahmen ausgebildeten Druckausgleichventil gewissermaßen vorgeschaltet. Da seine dem Innendruck zugewandte Fläche zwangsläufig wesentlich kleiner als die Innenfläche der Haube ist, läßt es sich mit geringerem Kraftaufwand als das große Ringventil zwischen Haube und Rahmen öffnen.

Ehe der Griff im Sinne der Betätigungsbewegung für die Verschlußglieder bewegt werden kann, wird durch Drücken auf den Griff zunächst das zwischen ihm und der Haube ausgebildete Dampfablaßventil geöffnet, worauf sich die Haube — nachdem der Innendruck ausreichend abgefallen ist — unschwer in ihre Öffnungsstellung gegenüber dem Rahmen bewegen läßt, wozu es lediglich der Aufrechterhaltung des Drucks auf den Griff bedarf. Alsdann kann das Öffnen der Schließmechanik erfolgen, beispielsweise durch Drehen des Griffs und damit der Haube.

Ist der neue Dampfdruckkochtopf, wie dies auch schon aus der DE-C 33 658 bekannt ist, mit am Deckel beweglich gelagerten, gleichmäßig am Deckelumfang verteilten Verschlußgliedern ausgerüstet, so bestehen vorzugsweise die Verschlußglieder aus Klammern, welche in der Schließstellung den nach außen abgekröpften, oberseitig glatten Rand des Behälters sowie den Rand des Deckels umgreifen, in der Öffnungsstellung jedoch freigeben. Auf diese Weise wird unter Beibehaltung aller Sicherheits- und Bedienvorteile eine Randausbildung für den Kochgutbehälter ermöglicht, die ihn ohne weiteres als Serviergeschirr verwendbar macht. Ferner kann besonders einfach ein und derselbe Deckel mit unterschiedlichen Kochgutbehältern kombiniert werden. Insoweit ist noch auf die aus der US-A-1 907 528 bekannte Verschlußmechanik hinzuweisen.

Die Zeichnung veranschaulicht die Erfindung an Ausführungsbeispielen, und zwar zeigt :

Fig. 1 einen geschlossenen und verriegelten Dampfdruckkochtopf im Querschnitt ;

Fig. 2 denselben Kochtopf in der Öffnungsstellung ;

Fig. 3 eine Draufsicht auf eine konstruktiv etwas andere Ausführungsform des Dampfdruckkochtopfes ; und

Fig. 4 eine der Fig. 3 entsprechende Draufsicht auf eine abgewandelte Ausführungsform der Schließmechanik.

Der Druckkochtopf besteht aus dem Kochgutbehälter 1 und dem im ganzen mit 2 bezeichneten Deckel. Der Behälter 1 hat einen nach außen abgeköpften, umlaufend gleichen, oberseitig glatten Rand 3.

Der Deckel 2 ist geteilt und besteht im wesentlichen aus einer — im Beispiel kreisförmigen — Haube 4 sowie einem zu dieser konzentrischen und die Haube überlappend untergreifenden Rahmen 5. Im Bereich des Rahmens 5 sind am Deckel 2, an dessen Umfang gleichmäßig verteilt, mehrere Klammern 6 angeordnet, die in der Schließstellung den Rahmen 5 und den Behälterrand 3 umgreifen.

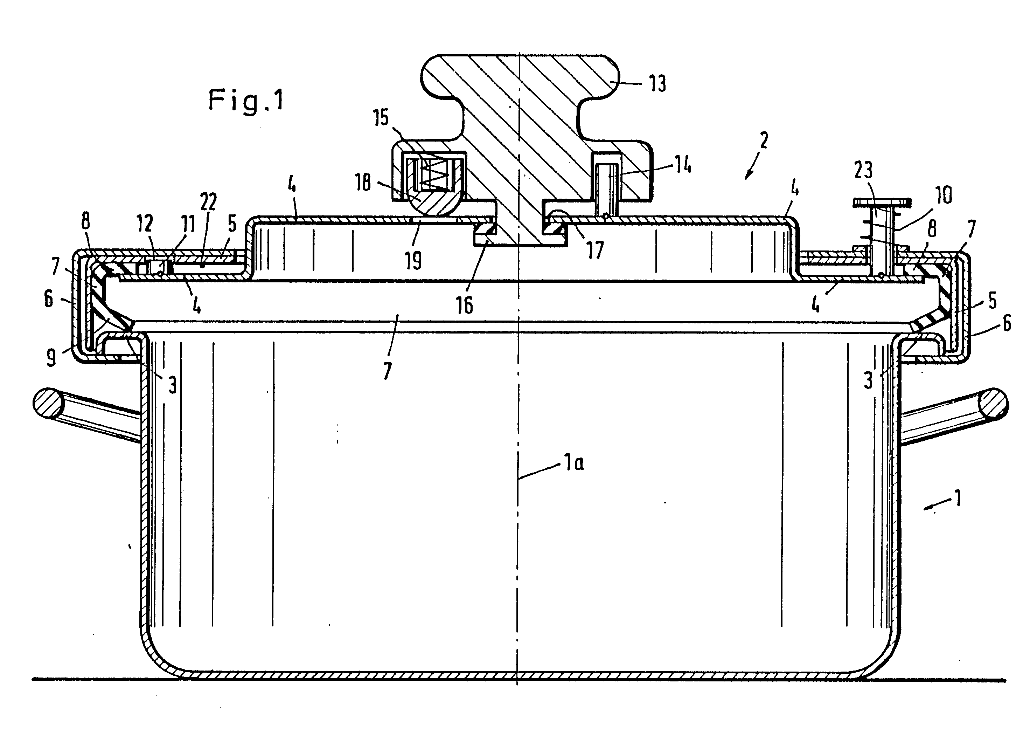

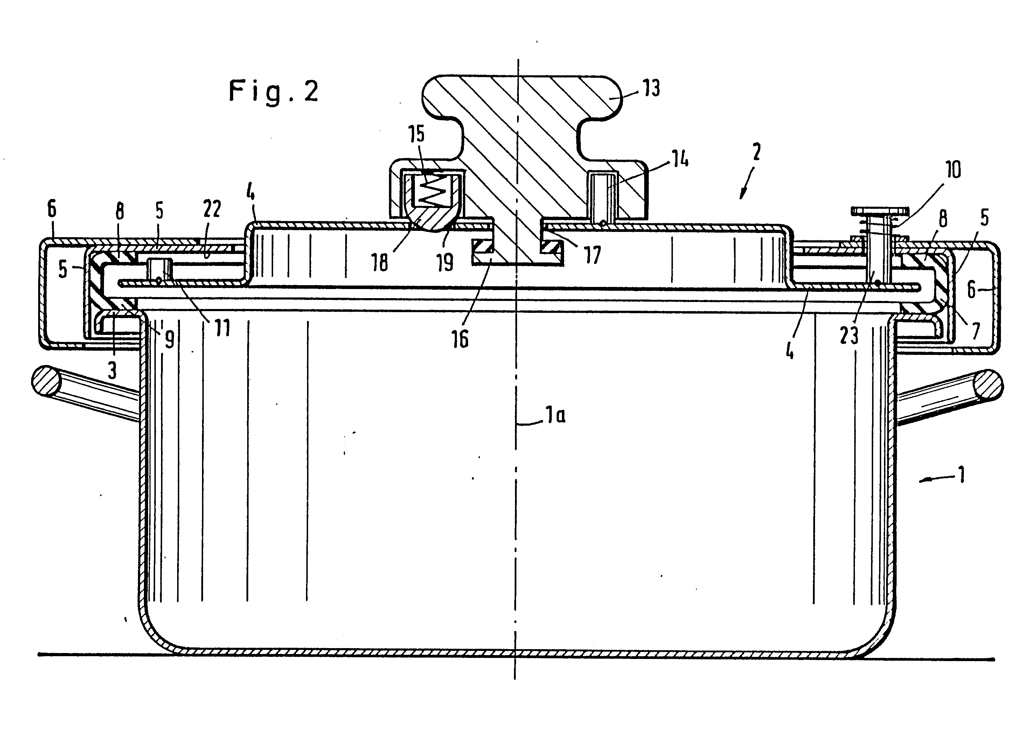

Zwischen dem Rahmen 5 und dem Behälterrand 3 ist ein Dichtungsprofil 7 so angeordnet, daß es an der Unterseite des im Querschnitt winkelförmigen Rahmens 5 gehalten ist. Die obere Dichtlippe 8 des Dichtungsprofils 7 liegt zwischen dem horizontalen Schenkel des Rahmens 5 und dem Randbereich der den Rahmen 5 untergreifenden Haube 4. Die untere Dichtlippe 9 des Dichtungsprofils 7 liegt mit ihrem freien Ende elastisch am Behälterrand 3 an. Kraftspeicher in Form von Federn 10, die über den Umfang des Deckels verteilt vorgesehen sind, ziehen die Haube 4 gegen die Dichtlippe 8 und spannen so die Haube 4 und den Rahmen 5 gegeneinander vor. Die Fig. 1 und 2 zeigen nur jeweils eine der Federn 10.

Im Überlappungsbereich zwischen der Haube 4 und dem Rahmen 5 ist an der Haube 4 mindestens ein Sperrglied 11 in Form eines nach oben ragenden Zapfens befestigt, welcher im Schließzustand der Klammern 6 in eine im Rahmen 5 vorgesehene Bohrung 12 eintreten kann und dann einerseits das Verdrehen der Haube 4 gegenüber dem Rahmen 5 blockiert (wodurch, wie noch beschrieben werden wird, ein Öffnen der Verriegelungsklammern 6 unmöglich ist) sowie die Anlage eines Randbereichs der Haube 4 an die Lippe 8 des Dichtungsprofils 7 erlaubt. Wird jedoch das Sperrglied 11 durch senkrechten Druck von oben auf die Haube 4 aus der Bohrung 12 herausbewegt und hierauf die Haube 4 gegenüber dem Rahmen 5 verdreht (wodurch sich die Klammern 6 in die Öffnungsstellung der Verriegelungsmechanik bewegen), dann schlägt das Sperrglied 11 mit seiner Oberseite an der Unterseite des Rahmens 5 an und hält die Haube 4 im Abstand von der Lippe 8 des Dichtungsprofils 7.

Zentrisch zur Mittelachse 1a, also in der Mitte der Haube 4 ist an dieser ein knopfartiger Griff 13 angeordnet. Ein exzentrisch an der Haube 4 befestigter Zapfen 14 ragt in eine entsprechende Sackbohrung des Griffes 13 von unten hinein und verhindert ein Verdrehen des Griffes 13 gegenüber der Haube 4, erlaubt jedoch eine Vertikalbewegung des Griffes 13 gegenüber der Haube 4, soweit sie ein Fortsatz 16, der durch eine Bohrung 17 in der Haube 4 ragt, zuläßt. Unter Zwischenschaltung eines geeigneten Dichtringes bildet der Fortsatz 16 des Griffes 13 mit der Haube 4 ein Dampfdruck-Ablaßventil, welches durch Drücken auf den Griff 13 geöffnet werden kann.

Ebenfalls exzentrisch zur Mittelachse 1a ist in einer Sackbohrung des Griffes 13 der Ventilkörper 18 eines Sicherheitsventils angeordnet, welcher zusammen mit einer Bohrung 19 in der Haube 4 das Sicherheitsventil bildet. Eine Feder 15 spannt den Ventilkörper 18 in seine Schließlage vor (Fig. 1 zeigt die offene Stellung, die das Sicherheitsventil 18, 19 bei Abblasen von Dampf einnimmt). Die Reaktionskraft der Feder 15, welche den Ventilkörper 18 gegen die Öffnung 19 preßt, drückt den Griff 13 nach oben und stellt die Schließvorspannung auch des Ablaßventils 16 dar.

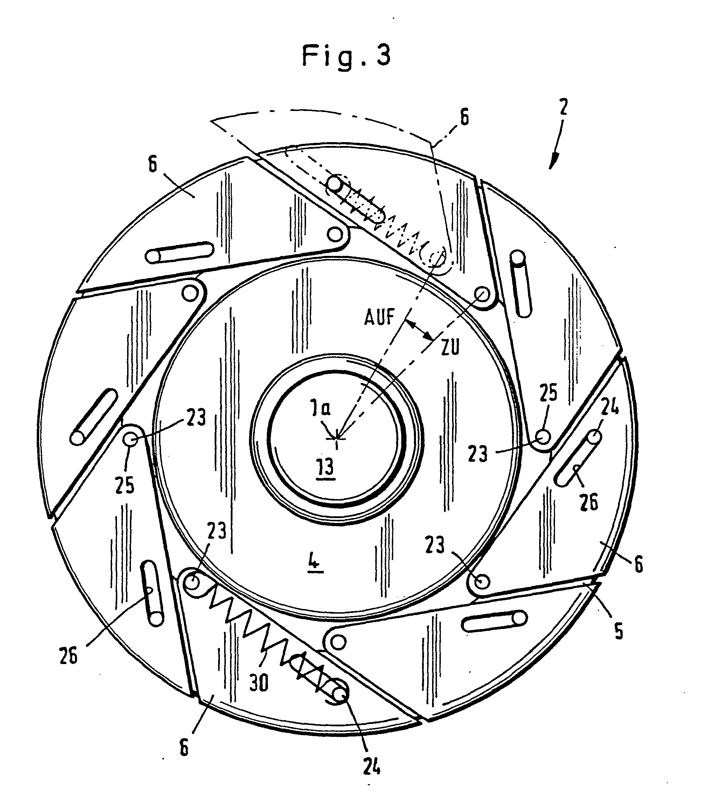

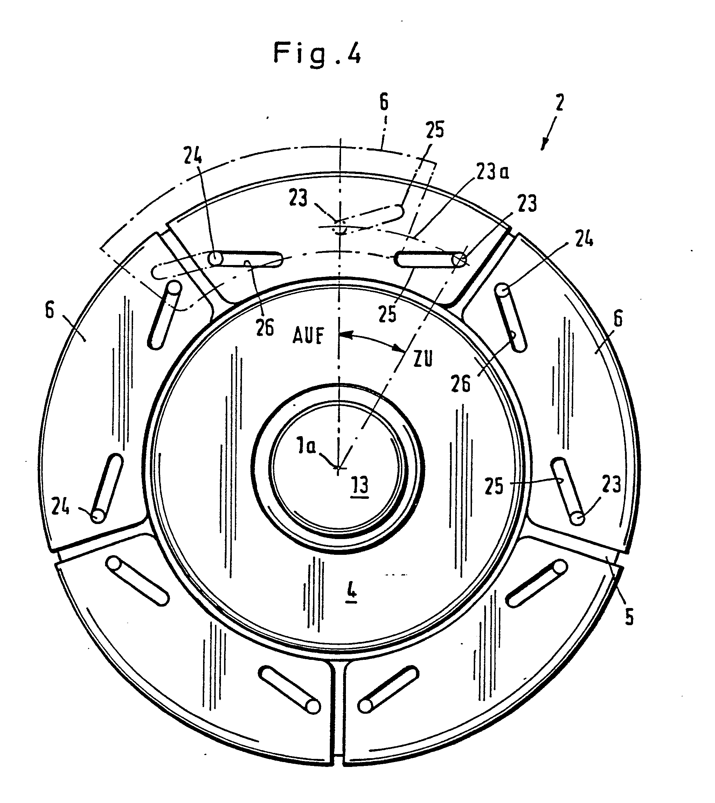

Die Fig. 3 und 4 stellen verschiedene Ausführungsformen der Schließmechanik bei einem in verkleinertem Maßstab gezeichneten und konstruktiv etwas abgewandelten Dampfdruckkochtopf dar; jedoch sind gleiche bzw. entsprechende Bauteile mit den gleichen Bezugszeichen wie in den Fig. 1 und 2 versehen.

Gemäß Fig. 3 sind die Klammern 6 in der Draufsicht etwa dreiecksförmig und jeweils nahe einem Eckpunkt auf einem ander Haube 4 befestigten Zapfen 23 drehbar gelagert; hierzu sind Bohrungen 25 in den Klammern 6 vorgesehen. Die Zapfen 23 können gleichzeitig als Träger für die Federn 10 (Fig. 1, 2) dienen. Am Rahmen 5 sind Zapfen 24 befestigt (die in den Fig. 1, 2 nicht dargestellt sind), welche Längsschlitze 26 in den Klammern 6 durchgreifen, die jeweils unter einem Winkel zu dem durch die Zapfen 24 gehenden Kreis um die Mittelachse 1a verlaufen.

In Fig. 3 ist die Schließstellung der Verriegelungsmechanik dargestellt. Wird die Haube 4 gegenüber dem Rahmen 5 in Richtung des Pfeiles « AUF » um die Mittelachse 1a verdreht, dann werden die Klammern 6, wie dies am Beispiel einer Klammer strichpunktiert angedeutet ist, mitgenommen und entsprechend der vorerwähnten Schräglage der Längsschlitze 26 nach außen in eine Öffnungsstellung (um die Zapfen 23) geschwenkt, in der die entsprechend geformten unteren Schenkel 6a der Klammern 6 den Rand 3 des Behälters 1 nicht mehr untergreifen. Federn 30 spannen die Klammern 6 in ihre Öffnungsstellung vor und unterstützen somit den Öffnungsvorgang; in der Schließstellung bleiben die Federn 30 durch die Blockierwirkung der in die Bohrungen 12 eingetretenen Sperrglieder 11 gespannt (Fig. 1).

Die Schließmechanik der Klammern 6 gemäß Fig. 4 unterscheidet sich von der vorstehend beschriebenen dadurch, daß die Klammern 6 beim Öffnen nicht verschwenkt, sondern radial nach außen bewegt werden. Dieser Bewegung ist allerdings auch, wie im Ausführungsbeispiel gemäß Fig. 3, eine kreisförmige Schwenkbewegung um die Mittelachse 1a überlagert. Wiederum sind die Zapfen 23 an der Haube 4 und die Zapfen 24 am Rahmen 5 befestigt. Der Zapfen 24 durchgreift wiederum einen Längsschlitz 26, dem ein vom Zapfen 23 durchsetzter Längsschlitz 25a in der Klammer 6 symmetrisch zugeordnet ist. Da die Zapfen 24 und 25 auf gleichem radialen Abstand von der Mittelachse 1a liegen, durchgreift der an der Haube 4 befestigte Zapfen 23 den Rahmen 5, in welchem daher jeweils ein Längsschlitz über den Kreisbogen 23a vorgesehen sein muß. Im übrigen entsprechen Funktion und Wirkungsweise der in Fig. 4 dargestellten Schließmechanik derjenigen des Ausführungsbeispieles von Fig. 3.

Im Betrieb geht das Öffnen des Dampfdruckkochtopfes aus der in Fig. 1 dargestellten Schließstellung (jedoch bei geschlossenem Sicherheitsventil 18, 19) in die in Fig. 2 gezeigte Öffnungsstellung wie folgt vor sich:

Durch vertikalen Druck auf den Griff 13 nach unten wird gegen die Kraft der Feder 15 das Dampfablaßventil geöffnet, weil sich der Fortsatz 16 des Griffes 13 in den Innenraum des Topfes öffnet und die Bohrung 17 freigibt. Sobald der Innendruck bis auf einen geringen Restdruck abgebaut ist, kann die Haube 4 relativ zum Rahmen 5 gegen die Kraft der Federn 10 (durch weiteren Druck auf den Griff 13) nach unten gedrückt werden. Die Haube 4 hebt dabei von der oberen Dichtlippe 8 ab, und restlicher Dampf kann durch den dabei entstehenden Ringspalt 20 entweichen. Bei diesem Vorgang wird das Dichtungsprofil 7 im Bereich der unteren Dichtlippe 9 elastisch verformt, die unteren Schenkel 6a der U-förmigen Klammern 6 lösen sich vom Rand 3 des Behälters 1 : Es bildet sich der Ringspalt 21 (Fig. 2).

Weiterer Druck auf den Griff 13 und damit die Haube 4 läßt die Sperrglieder 11 aus den Bohrungen 12 im Rahmen 5 treten. Sobald sich die Sperrglieder 11 mit ihrer Oberfläche unterhalb der Innenfläche 22 des Rahmens 5 befinden, kann die Haube 4 relativ zum Rahmen 5 verdreht werden. Dabei bewegen sich die Klammern 6 im wesentlichen radial auswärts und kommen mit ihren unteren Schenkeln 6a vom Rand 3 des Behälters 1 frei. Der Deckel kann abgenommen werden.

Wenn dabei der Druck auf die Haube 4 und den Griff 13 nachläßt, legen sich die Sperrglieder 11 von unten gegen die Fläche 22 des Rahmens 5 an und halten den Ringspalt 20 offen. Erst wenn bei einem anschließenden Schließ- und Verriegelungsvorgang durch gegenläufiges Verdrehen der Haube 4 gegenüber dem Rahmen 5 die Sperrglieder 11 (nachdem die Klammern 6 in ihre Schließstellung bewegt wurden) mit den Bohrungen 12 fluchten, kann sich die Haube 4 wieder an die Dichtlippe 8 des Dichtungsprofils anlegen. Solange dies nicht geschehen ist, kann sich selbst bei hoher Energiezufuhr im Topfinnern kein Überdruck aufbauen.

**Patentansprüche**

1. Dampfdruckkochtopf aus einem oben offenen Kochgutbehälter (1) mit einem die Öffnung umgebenden, gleichförmig umlaufenden Rand (3), einem auf den Behälterrand (3) mit seinem Rand aufsetzbaren, ein Sicherheitsventil (18, 19) aufweisenden Deckel (2), sowie einer Schließmechanik, deren die Ränder von Behälter (1) und Deckel (2) im Schließzustand gegeneinander pressende Verschlußglieder (6) gemeinsam von einer zentrisch angeordneten, relativ zum Deckel (2) beweglichen Betätigungseinrichtung (13) zwischen einer Öffnungsstellung und einer Schließstellung verstellbar sind, dadurch gekennzeichnet, daß der Deckel (2) aus einer zentrischen, die Verschlußglieder (6) betätigenden Haube (4) und einem diese konzentrisch umgebenden, gegenüber dem Behälter (1) mit Hilfe eines an sich bekannten Dichtungsprofils (7) abgedichteten Rahmen (5) besteht, wobei die Haube (4) den Rahmen (5) überlappend untergreift und an einer an der Unterseite des Rahmens (5) gehaltenen Dichtung (8) derart anliegt, daß die relative Position von Haube (4) und Dichtung (8) unter dem Druck im Topfinnern infolge Abdichtung und Reibungswiderstand die Öffnungsbetätigung der Verschlußglieder (6) durch die Haube (4) verhindert und nur bei geringem Restdruck infolge Abhebens der Haube (4) von der Dichtung (8) erlaubt.

2. Dampfdruckkochtopf nach Anspruch 1, dadurch gekennzeichnet, daß die Dichtung zwischen Haube (4) und Rahmen (5) eine Lippe (8) des Dichtungsprofils (7) ist.

3. Dampfdruckkochtopf nach Anspruch 1 oder 2 mit einem kreisförmigen Querschnitt, dadurch gekennzeichnet, daß die Haube (4) kreisförmig und der Rahmen (5) kreisringförmig ausgebildet ist, und daß die Haube und der Rahmen gegeneinander um die Mittelachse (1a) verdrehbar sind.

4. Dampfdruckkochtopf nach Anspruch 2 oder 3, dadurch gekennzeichnet, daß Vorspannmittel (10) die Haube (4) in Anlage an die Lippe (8) des Dichtungsprofils (7) drücken.

5. Dampfdruckkochtopf nach Anspruch 4, dadurch gekennzeichnet, daß mindestens ein Sperrglied (11) zwischen der Haube (4) und dem Rahmen (5) vorgesehen ist, welches nur in der Schließstellung der Verschlußglieder (6) die Anlage der Haube (4) an die Lippe (8) gestattet und in jeder anderen Stellung der Verschlußglieder die Haube auf Abstand von der Lippe des Dichtungsprofils hält.

6. Dampfdruckkochtopf nach Anspruch 5, dadurch gekennzeichnet, daß das Sperrglied (11) aus einem oberseitig an der Haube befestigten Zapfen besteht, der in der Schließstellung der Verschlußglieder (6) in eine Bohrung (12) im Rahmen (5) eintreten kann.

7. Dampfdruckkochtopf nach mindestens einem der vorhergehenden Ansprüche, dadurch gekennzeichnet, daß der Rahmen (5) einen Winkelquerschnitt hat und das Dichtungsprofil (7), welches die Form eines zur Mittelachse (1a) offenen U hat, entlang seinem Steg und seiner den oberen Schenkel bildenden Lippe (8) umfaßt, während der untere Schenkel eine Lippe (9) bildet und mit derem freien Ende nachgiebig auf dem Rand (3) des Behälters (1) aufliegt.

8. Dampfdruckkochtopf nach mindestens einem der vorhergehenden Ansprüche, dadurch gekennzeichnet, daß die Betätigungseinrichtung einen unverdrehbar, aber senkrecht verschieblich an der Haube (4) gehaltenen, zentrischen Griff (13) aufweist und ein Fortsatz (16) am Griff mit der Haube (4) ein in die Schließstellung vorgespanntes, durch Verschieben des Griffs zu öffnendes Dampfablaßventil bildet.

9. Dampfdruckkochtopf nach Anspruch 8, dadurch gekennzeichnet, daß zwischen dem Griff (13) und der Haube (4) auch ein Sicherheitsventil (18, 19) vorgesehen ist, dessen Vorspannung in die Schließstellung zugleich die Vorspannung des Ablaßventils darstellt.

10. Dampfdruckkochtopf nach Anspruch 1 oder einem der folgenden Ansprüche mit am Deckel beweglich gelagerten, gleichmäßig am Deckelumfang verteilten Verschlußgliedern, dadurch gekennzeichnet, daß die Verschlußglieder (6) aus Klammern bestehen, welche in der Schließstellung den nach außen abgekröpften, oberseitig glatten Rand des Behälters sowie den Rand des Deckels umgreifen, in der Öffnungsstellung jedoch freigeben.

11. Dampfdruckkochtopf nach Anspruch 10, dadurch gekennzeichnet, daß die Klammern (6) mit ihrem oberen Schenkel an der Haube (4) beweglich gelagert sind (Zapfen 23), und daß am Rahmen (5) befestigte Steuernocken (24) in Führungsschlitze (26) eingreifen, welche bei einer Relativbewegung zwischen der Haube (4) und dem Rahmen (5) die Klammern (6) auswärts bewegen.

## Claims

1. A steam pressure cooker consisting of a container (1) open at the top for the commodity which is to be cooked and having an edge (3) running uniformly round to enclose the opening, a lid (2) which may be mounted by its edge on the edge (3) of the container and exhibits a safety-valve (16, 19), as well as a closing mechanism the closure members (6) of which in the closed state press together the edges of the container (1) and lid (2) and are adjustable jointly between an open position and a closed position by an actuator device (13) arranged centrally and movable relative to the lid (2), characterized in that the lid (2) consists of a central hood (4) which actuates the closure members (6) and a frame (5) surrounding it concentrically and sealed with respect to the container (1) by means of a sealing profile (7) known in itself, the hood (4) engaging under the frame (5) in overlap and resting against a seal (8) held against the underside of the frame (5) in such a way that the relative position of the hood (4) and the seal (8) under the pressure inside the cooker and because of the sealing and frictional resistance prevents the opening actuation of the closure members (6) by the hood (4) and only allows it at low residual pressure because of raising of the hood (4) from the seal (8).

2. A steam pressure cooker as in Claim 1, characterized in that the seal between the hood (4) and the frame (5) is a lip of the sealing profile (7).

3. A steam pressure cooker as in Claim 1 or 2, having a circular cross-section, characterized in that the hood (4) is made circular and the frame (5) is made in the form of a circular ring, and that the hood and the frame are able to twist with respect to one another about the central axis (1a).

4. A steam pressure cooker as in Claim 2 or 3, characterized in that prestressing means (10) press the hood (4) into contact with the lip (8) of the sealing profile (7).

5. A steam pressure cooker as in Claim 4, characterized in that at least one locking member (11) is provided between the hood (4) and the frame (5), which only in the closed position of the closure members (6) allows contact of the hood (4) against the lip (8) and in any other position of the closure members holds the hood away from the lip of the sealing profile.

6. A steam pressure cooker as in Claim 5, characterized in that the locking member (11) consists of a stud fastened to the top of the hood, which in the closed position of the closure members (6) can enter a hole (12) drilled in the frame (5).

7. A steam pressure cooker as in at least one of the preceding Claims, characterized in that the frame (5) has an angular cross-section and embraces the sealing profile (7) which has the shape of a U open towards the central axis, along its web and the lip (8) forming the upper side of the U, whilst the lower side forms a lip (9) and by the free end of it rests resiliently against the edge (3) of the container (1).

8. A steam pressure cooker as in at least one of the preceding Claims, characterized in that the actuator device exhibits a central handle (13) which is held in the hood (4) unable to twist but able to shift vertically and an extension (16) from the handle forms with the hood (4) a steam release valve which is prestressed into the closed position and is to be opened through shifting of the handle.

9. A steam pressure cooker as in Claim 8, characterized in that between the handle (13) and the hood (4) a safety-valve (18, 19) is also provided, the prestressing of which into the closed position at the same time produces the prestressing of the release valve.

10. A steam pressure cooker as in Claim 1 or one of the following Claims, having closure members supported movably on the lid and distributed uniformly round the circumference of the lid, characterized in that the closure members (6) consist of clamps which in the closed position embrace the edge of the container, which is bent down outwards to be smooth on top, as well as the edge of the lid, but in the open position release them.

11. A steam pressure cooker as in Claim 10, characterized in that the clamps (6) are supported movably on the hood (4) by their upper arms (studs 23), and that control cams (24) fastened to the frame (5) engage in guide slots (26) which upon relative movement between hood (4) and frame (5) move the clamps (6) outwards.

## Revendications

1. Marmite sous pression de vapeur constituée d'un récipient de cuisson (1) ouvert en haut, un rebord uniforme (3) entourant l'ouverture, d'un couvercle (2) s'engageant par sa bordure sur le rebord (3) du récipient et comportant une soupape de sûreté (18, 19) ainsi que d'un mécanisme de fermeture dont les organes de fermeture (6) comprimant l'un contre l'autre, dans l'état de fermeture, les bords du récipient (1) et du couvercle (2), peuvent être déplacés conjointement entre une position d'ouverture et une position de fermeture par un dispositif de manœuvre (13) disposé au centre et mobile par rapport au couvercle (2), caractérisée en ce que le couvercle (2) se compose d'un capot central (4) actionnant les organes de fermeture (6) et d'un cadre concentrique (5) entourant ce capot et rendu étanche par rapport au récipient (1) à l'aide d'un profilé d'étanchéité en soi connu (7), le capot (4) s'engageant sous le cadre (5) qui le chevauche et s'appliquant contre un joint d'étanchéité (8) maintenu sur la surface inférieure du cadre (5), de manière que la position relative du capot (4) et du joint d'étanchéité (8) empêche, sous la pression de l'intérieur de la marmite, par suite de l'étanchéité et de la résistance au frottement, la manœuvre d'ouverture des organes de fermeture (6) par le capot (4) et ne permette cette manœuvre qu'avec une très faible pression résiduelle par suite de la séparation du capot et du joint d'étanchéité (8).

2. Marmite sous pression de vapeur selon la revendication 1, caractérisée en ce que le joint d'étanchéité entre le capot (4) et le cadre (5) est formé par une lèvre (8) du profilé d'étanchéité (7).

3. Marmite sous pression de vapeur selon la revendication 1 ou 2, avec une section circulaire, caractérisée en ce que le capot (4) est circulaire et en ce que le cadre (5) est réalisé en forme de couronne circulaire, et en ce que le capot et le cadre peuvent tourner l'un par rapport à l'autre autour de l'axe (1a).

4. Marmite sous pression de vapeur selon la revendication 2 ou 3, caractérisée en ce que des organes de précontrainte (10) appliquent le capot (4) en appui sur la lèvre (8) du profilé d'étanchéité (7).

5. Marmite sous pression de vapeur selon la revendication 4, caractérisée en ce qu'au moins un organe de verrouillage (11) est prévu entre le capot (4) et le cadre (5), cet organe ne permettant l'appui du capot (4) sur la lèvre (8) que dans la position de fermeture des organes de fermeture (6) et maintenant, dans toute autre position des organes de fermeture, le capot à distance de la lèvre du profilé d'étanchéité.

6. Marmite sous pression de vapeur selon la revendication 5, caractérisée en ce que l'organe de verrouillage (11) est constitué d'un téton fixe sur la surface supérieure du capot, ce téton pouvant, dans la position de fermeture des organes de fermeture (6), pénétrer dans un alésage (12) du cadre (5).

7. Marmite sous pression de vapeur selon au moins l'une des revendications précédentes, caractérisée en ce que le cadre (5) a une section en cornière et entoure le profilé d'étanchéité (7), qui a la forme d'un U ouvert vers l'axe (1a), suivant son âme et son aile supérieure qui forme la lèvre (8), tandis que l'aile inférieure de ce profilé forme une lèvre (9) qui repose élastiquement sur le rebord (3) du récipient (1).

8. Marmite sous pression de vapeur selon au moins l'une des revendications précédentes, caractérisée en ce que le dispositif de manœuvre comporte une poignée (13) maintenue sur le capot (4) sans pouvoir tourner mais en pouvant se déplacer verticalement, une saillie (16) de la poignée formant avec le capot (4) une soupape d'évacuation de vapeur précontrainte en position de fermeture et s'ouvrant par déplacement de la poignée.

9. Marmite sous pression de vapeur selon la revendication 8, caractérisée en ce qu'une soupape de sûreté (18, 19) est prévue entre la poignée (13) et le capot (4), la précontrainte de cette soupape en position de fermeture étant en même temps la précontrainte de la soupape d'évacuation de vapeur.

10. Marmite sous pression de vapeur selon la revendication 1 ou l'une des revendications suivantes, avec des organes de fermeture montés mobiles sur le couvercle et régulièrement répartis sur le pourtour de ce couvercle, caractérisée en ce que les organes de fermeture (6) sont des agrafes entourant dans la position de fermeture le rebord lisse supérieur, recourbé vers l'extérieur, du récipient ainsi que le bord du couvercle, en libérant cependant ces bords dans la position d'ouverture.

11. Marmite sous pression de vapeur selon la revendication 10, caractérisée en ce que les agrafes (6) sont montées mobiles (axe 23) par leur branche supérieure sur le capot (4), et en ce que des ergots de commande (24) s'engagent dans des fentes de guidage (26), ces ergots déplaçant les agrafes (6) vers l'extérieur en cas de mouvement relatif entre le capot (4) et le cadre (5).

Fig.1

Fig. 2

0 108 203

# Fig. 3

# Fig.4